# EUROPEAN PATENT APPLICATION

(11) **EP 4 231 058 A1**
(43) Date of publication of application: **23.08.2023**
(21) Application number: 21879683.7
(22) Date of filing: 12.04.2021
(51) Int. Cl.: G01T 1/17, H04N 5/32, H04N 5/374, H04N 5/378

(54) **RADIATION DETECTOR**

(30) Priority: 16.10.2020 JP 2020174734
(71) Applicant: Canon Electron Tubes & Devices Co., Ltd., Otawara-shi, Tochigi 324-0036 (JP)
(72) Inventor: TAKAHASHI, Yuta, Otawara-shi, Tochigi 324-0036 (JP); ONIHASHI, Hiroshi, Otawara-shi, Tochigi 324-0036 (JP); MIBUKA, Ryo, Otawara-shi, Tochigi 324-0036 (JP); YOSHIDA, Yasufumi, Otawara-shi, Tochigi 324-0036 (JP)
(74) Representative: Henkel & Partner mbB
(86) International application number: PCT/JP2021/015207
(87) International publication number: WO 2022/079936

(57) **Abstract**

The radiation detection according to an embodiment of the present invention comprises a plurality of control lines extending in a first direction, a plurality of data lines extending in a second direction orthogonal to the first direction, photoelectric conversion parts provided in each of a plurality of regions demarcated by the plurality of control lines and the plurality of data lines, a plurality of noise detection parts arranged and provided on the outside of the regions in which the plurality of photoelectric conversion parts are provided, a control circuit for inputting a control signal to first thin film transistors respectively provided to the plurality of photoelectric conversion parts and second thin film transistors respectively provided to the plurality of noise detection parts, a signal detection circuit for reading image data signals from the plurality of photoelectric conversion parts and reading noise signals from the plurality of noise detection parts, and an image formation circuit for forming a radiation image on the basis of the read image data signals and the read noise signals. At least any one of the following is the case: the signal detection circuit does not read the image data signals from the photoelectric conversion parts that are adjacent to the noise detection parts, the image formation circuit does not use the image data signals read from the photoelectric conversion parts that are adjacent to the noise detection parts during formation of the radiation image, or the photoelectric conversion parts that are adjacent to the noise detection parts are not electrically connected to at least either the control circuit or the signal detection circuit.

## Description

### [Technical Field]

Embodiments of the invention relate to a radiation detector.

### [Background Art]

An X-ray detector is an example of a radiation detector. The X-ray detector includes, for example, an array substrate that includes multiple photoelectric conversion parts, and a scintillator that is located on the multiple photoelectric conversion parts and converts X-rays into fluorescence. Also, the photoelectric conversion part includes a photoelectric conversion element that converts the fluorescence from the scintillator into a signal charge, a thin film transistor that switches between storing and discharging the signal charge, a storage capacitor that stores the signal charge, etc.

Generally, an X-ray detector configures an X-ray image as follows. First, the incidence of X-rays is recognized by a signal input from the outside. Then, after a predetermined amount of time has elapsed, the thin film transistors of the photoelectric conversion parts that perform reading are set to the on-state, and the stored signal charge is read as image data signals. Then, the X-ray image is configured based on the values of the image data signals read from the photoelectric conversion parts.

However, values that correspond to the dose of the X-rays and values that correspond to noise are included in the values of the image data signals read from the photoelectric conversion parts. Therefore, when configuring the X-ray image, offset processing (an offset correction) is performed in which the values corresponding to the noise are subtracted from the values of the image data signals read from the photoelectric conversion parts.

In such a case, noise can be broadly divided into random noise and lateral noise. Random noise occurs in a uniform distribution over the entire X-ray image. On the other hand, lateral noise appears as a striation in the lateral direction or longitudinal direction. Therefore, lateral noise is more noticeable than random noise; it is therefore desirable to reduce lateral noise.

To reduce such lateral noise, technology has been proposed in which multiple noise detecting parts that do not generate signal charges when X-rays are incident are included, and the lateral noise is detected by the multiple noise detecting parts. The multiple noise detecting parts are provided to be arranged outside the region (the effective pixel region) in which the multiple photoelectric conversion parts are located.

The multiple noise detecting parts can be formed together with the multiple photoelectric conversion parts by using semiconductor manufacturing processes. However, because the noise detecting parts that do not generate signal charges have different configurations from the photoelectric conversion parts that generate signal charges, the process conditions of dry etching, wet etching, etc., are different between the region in which the multiple photoelectric conversion parts are located and the region in which the multiple noise detecting parts are located.

The dimensions and the like fluctuate more easily for the components formed at the boundary of the regions having different process conditions. Therefore, image characteristic fluctuation, electrical disconnect, etc., caused by fluctuation of the dimensions, etc., easily occur in the photoelectric conversion parts located at the vicinity of the boundary between the region in which the multiple photoelectric conversion parts are located and the region in which the multiple noise detecting parts are located; therefore, there is a risk that the quality of the X-ray image may degrade.

It is therefore desirable to develop technology that can detect noise and can maintain the quality of an X-ray image.

### [Prior Art Documents]

### [Patent Literature]

[Patent Literature 1] JP-A 2011-97452 (Kokai)

### [Summary of Invention]

### [Technical Problem]

A problem to be solved by the invention is to provide a radiation detector that can detect noise and can maintain the quality of a radiation image.

### [Solution to Problem]

A radiation detector according to an embodiment includes multiple control lines extending in a first direction, multiple data lines extending in a second direction orthogonal to the first direction, photoelectric conversion parts located respectively in multiple regions defined by the multiple control lines and the multiple data lines, multiple noise detecting parts arranged outside a region in which the multiple photoelectric conversion parts are located, a control circuit inputting control signals to first thin film transistors located respectively in the multiple photoelectric conversion parts and to second thin film transistors located respectively in the multiple noise detecting parts, a signal detection circuit reading image data signals from the multiple photoelectric conversion parts and reading noise signals from the multiple noise detecting parts, and an image configuration circuit configuring a radiation image based on the read image data signals and the read noise signals. The signal detection circuit does not read the image data signals from the photoelectric conversion parts adjacent to the noise detecting parts, the image configuration circuit does not use the image data signals read from the photoelectric conversion parts adjacent to the noise detecting parts when configuring the radiation image, and/or the photoelectric conversion parts adjacent to the noise detecting parts are not electrically connected with at least one of the control circuit or the signal detection circuit.

### [Brief Description of Drawings]

[FIG. 1] FIG. 1 is a schematic perspective view illustrating an X-ray detector.
[FIG. 2] FIG. 2 is a block diagram of the X-ray detector.
[FIG. 3] FIG. 3 is a circuit diagram of an array substrate.
[FIG. 4] FIG. 4 is a schematic plan view illustrating a noise detecting part.
[FIG. 5] FIG. 5 is a schematic plan view illustrating the noise detecting part.
[FIG. 6] FIGS. 6A and 6B are schematic plan views illustrating the location of the region in which the multiple noise detecting parts are located.
[FIG. 7] FIG. 7 is a schematic plan view illustrating the location of a noise detecting part according to another embodiment.
[FIG. 8] FIG. 8 is a schematic plan view illustrating the location of the noise detecting part according to another embodiment.
[FIG. 9] FIGS. 9A and 9B are schematic plan views illustrating the location of the region in which the multiple noise detecting parts are located.
[FIG. 10] FIG. 10 is a schematic plan view illustrating a noise detecting part according to another embodiment.
[FIG. 11] FIG. 11 is a schematic plan view illustrating a noise detecting part according to another embodiment.
[FIG. 12] FIG. 12 is a schematic plan view illustrating the location of the region in which the multiple noise detecting parts are located.

### [Description of Embodiments]

Embodiments will now be illustrated with reference to the drawings. Similar components in the drawings are marked with the same reference numerals; and a detailed description is omitted as appropriate.

A radiation detector according to the embodiment is applicable to various radiation other than X-rays such as γ-rays, etc. Herein, as an example, the case relating to X-rays is described as a typical example of radiation. Accordingly, applications to other radiation also are possible by replacing "X-ray" of embodiments described below with "other radiation".

An X-ray detector 1 illustrated below is an X-ray planar sensor that detects an X-ray image, i.e., a radiation image.

For example, the X-ray detector 1 can be used in general medical care, non-destructive inspection, etc., but is not limited in its application.

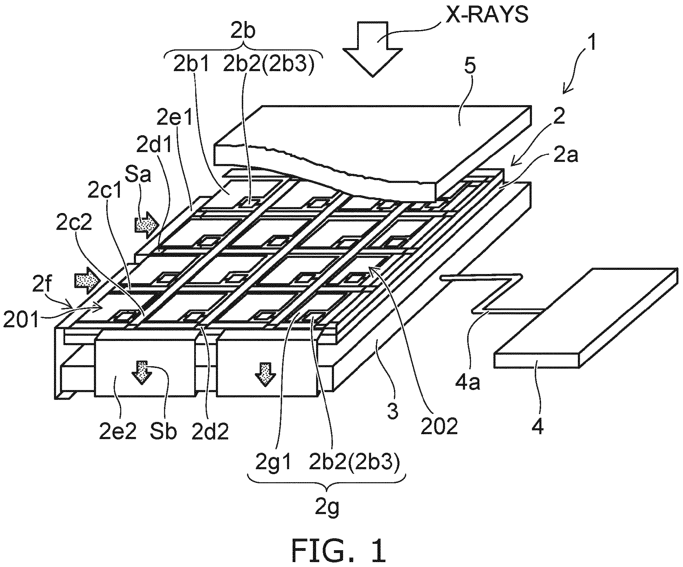

FIG. 1 is a schematic perspective view illustrating the X-ray detector 1.

A bias line 2c3 and the like are not illustrated in FIG. 1.

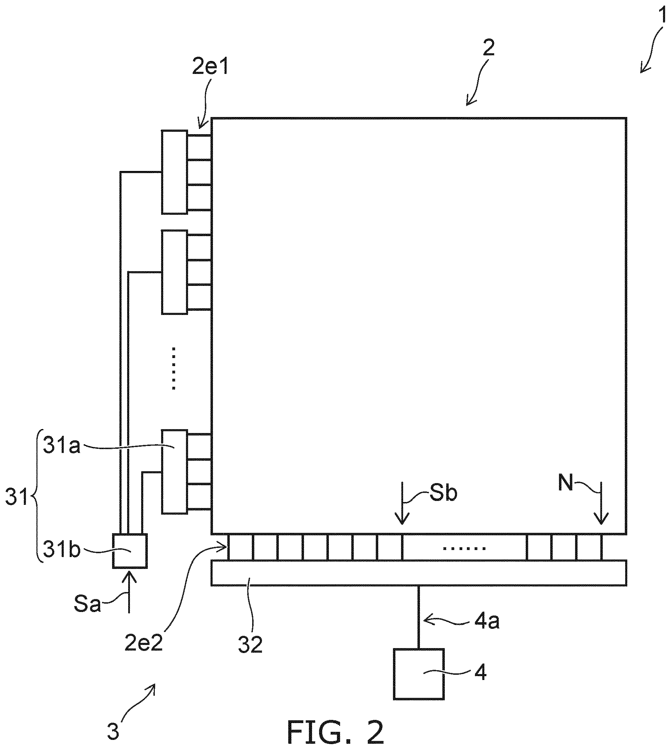

FIG. 2 is a block diagram of the X-ray detector 1.

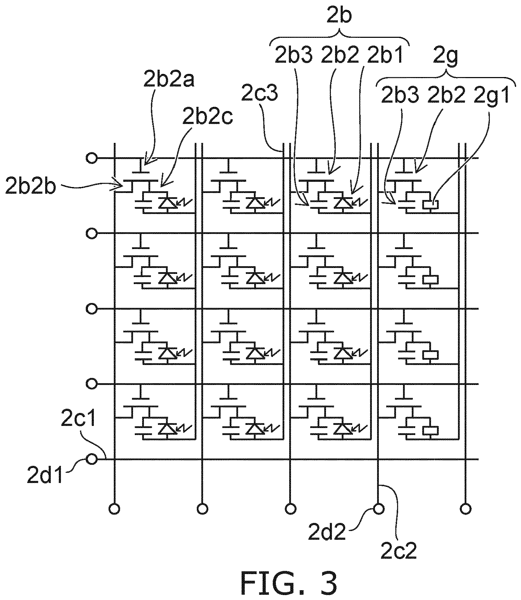

FIG. 3 is a circuit diagram of an array substrate 2.

As shown in FIGS. 1 to 3, the X-ray detector 1 includes, for example, the array substrate 2, a signal processing circuit 3, an image configuration circuit 4, and a scintillator 5.

The array substrate 2 converts, into an electrical signal, fluorescence (visible light) converted from X-rays by the scintillator 5.

The array substrate 2 includes, for example, a substrate 2a, a photoelectric conversion part 2b, a control line (or gate line) 2c1, a data line (or signal line) 2c2, the bias line 2c3, and a noise detecting part 2g.

The numbers and the like of the photoelectric conversion part 2b, the control line 2c1, the data line 2c2, the bias line 2c3, and the noise detecting part 2g are not limited to those illustrated.

The substrate 2a is plate-shaped and formed from a light-transmitting material such as, for example, alkali-free glass, etc.

Multiple photoelectric conversion parts 2b are located at one surface of the substrate 2a.

The photoelectric conversion parts 2b are rectangular and are located respectively in multiple regions defined by the multiple control lines 2c1 and the multiple data lines 2c2. The multiple photoelectric conversion parts 2b are arranged in a matrix configuration.

One photoelectric conversion part 2b corresponds to one pixel (pixel) of the X-ray image.

Each of the multiple photoelectric conversion parts 2b includes, for example, a photoelectric conversion element 2b1 and a thin film transistor (TFT; Thin Film Transistor) 2b2 (corresponding to an example of a first thin film transistor) that is a switching element. Also, as shown in FIG. 3, a storage capacitor 2b3 that stores the signal charge converted by the photoelectric conversion element 2b1 can be included. The storage capacitor 2b3 has, for example, a flat plate shape and can be located under each thin film transistor 2b2. However, according to the capacitance of the photoelectric conversion element 2b1, the photoelectric conversion element 2b1 also can be used as the storage capacitor 2b3.

The photoelectric conversion element 2b1 can be, for example, a photodiode, etc.

The thin film transistor 2b2 switches between storing and discharging the charge generated by fluorescence incident on the photoelectric conversion element 2b1. The thin film transistor 2b2 includes a gate electrode 2b2a, a drain electrode 2b2b, and a source electrode 2b2c. The gate electrode 2b2a of the thin film transistor 2b2 is electrically connected with the corresponding control line 2c1. The drain electrode 2b2b of the thin film transistor 2b2 is electrically connected with the corresponding data line 2c2. The source electrode 2b2c of the thin film transistor 2b2 is electrically connected to the corresponding photoelectric conversion element 2b1 (electrode 2blb) and storage capacitor 2b3. Also, the storage capacitor 2b3 and the anode side of the photoelectric conversion element 2b1 are electrically connected with the corresponding bias line 2c3.

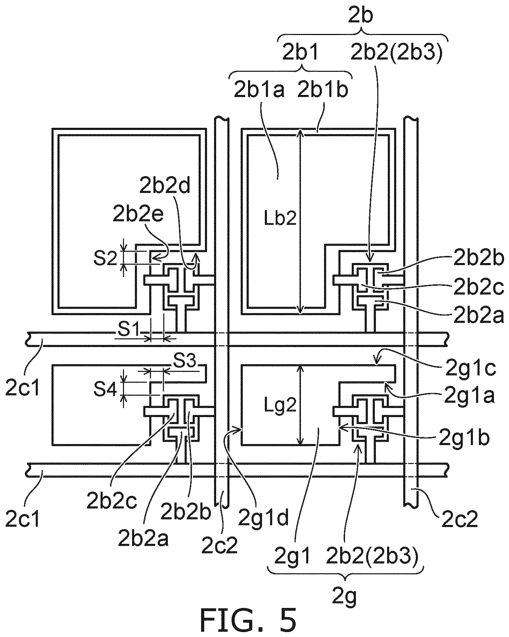

In other words, the thin film transistor 2b2 is electrically connected to the corresponding control line 2c1 and the corresponding data line 2c2. The electrode 2blb at the substrate 2a side of the photoelectric conversion element 2b1 is electrically connected with the thin film transistor 2b2 (see FIGS. 5, 7, and 8).

Multiple control lines 2c1 are arranged parallel to each other at a prescribed spacing. For example, the control lines 2c1 extend in a row direction (corresponding to an example of a first direction).

One control line 2c1 is electrically connected with one of multiple wiring pads 2d1 located at the perimeter edge vicinity of the substrate 2a. One of multiple wiring parts provided in a flexible printed circuit board 2e1 is electrically connected to one wiring pad 2d1. The other ends of the multiple wiring parts provided in the flexible printed circuit board 2e1 are electrically connected with a control circuit 31 provided in the signal processing circuit 3.

Multiple data lines 2c2 are arranged parallel to each other at a prescribed spacing. For example, the data lines 2c2 extend in a column direction (corresponding to an example of a second direction) orthogonal to the row direction.

One data line 2c2 is electrically connected with one of multiple wiring pads 2d2 located at the perimeter edge vicinity of the substrate 2a. One of multiple wiring parts provided in a flexible printed circuit board 2e2 is electrically connected to one wiring pad 2d2. The other ends of the multiple wiring parts provided in the flexible printed circuit board 2e2 are electrically connected with a signal detection circuit 32 provided in the signal processing circuit 3.

The bias line 2c3 is provided parallel to the data line 2c2 between the data line 2c2 and the data line 2c2.

A not-illustrated bias power supply is electrically connected to the bias line 2c3. For example, a not-illustrated bias power supply can be provided in the signal processing circuit 3, etc.

The bias line 2c3 is not always necessary and may be included as necessary. When the bias line 2c3 is not included, the storage capacitor 2b3 and the anode side of the photoelectric conversion element 2b1 are electrically connected to ground instead of the bias line 2c3.

For example, the control line 2c1, the data line 2c2, and the bias line 2c3 can be formed using a low-resistance metal such as aluminum, chrome, etc.

A protective layer 2f covers the photoelectric conversion part 2b, the control line 2c1, the data line 2c2, and the bias line 2c3.

The protective layer 2f includes, for example, at least one of an oxide insulating material, a nitride insulating material, an oxynitride insulating material, or a resin material.

Multiple noise detecting parts 2g are provided as shown in FIG. 3. The multiple noise detecting parts 2g are arranged outside the region (an effective pixel region 201) in which the multiple photoelectric conversion parts 2b are located. The multiple noise detecting parts 2g are arranged along at least one of the control line 2c1 or the data line 2c2. For example, as shown in FIG. 3, the multiple noise detecting parts 2g can be arranged along the data line 2c2. For example, the multiple noise detecting parts 2g also can be arranged along the control line 2c1. For example, the multiple noise detecting parts 2g also can be arranged along the control line 2c1 and the data line 2c2.

Although the multiple noise detecting parts 2g are located at one outer side of the effective pixel region 201 in the illustration of FIG. 3, the multiple noise detecting parts 2g may be located at two outer sides, three outer sides, or four outer sides of the effective pixel region 201.

Each of the multiple noise detecting parts 2g includes, for example, a capacitance part 2g1 and the thin film transistor 2b2 (corresponding to an example of a second thin film transistor). The thin film transistor 2b2 is electrically connected to the corresponding control line 2c1 and the corresponding data line 2c2. The capacitance part 2g1 is electrically connected with the thin film transistor 2b2.

When the photoelectric conversion part 2b includes the storage capacitor 2b3, the storage capacitor 2b3 also can be included in the noise detecting part 2g. For example, the storage capacitor 2b3 can be located under the capacitance part 2g1.

For example, the capacitance part 2g1 can be formed from a conductive material such as a metal, etc. If the capacitance part 2g1 is formed from a conductive material, a signal charge is substantially not generated even when the fluorescence generated by the scintillator 5 is incident on the capacitance part 2g1. For example, the capacitance part 2g1 can be formed from the same material as the electrode 2blb of the photoelectric conversion element 2b1. For example, the capacitance part 2g1 can be formed using a low-resistance metal such as aluminum, chrome, etc.

The gate electrode 2b2a of the thin film transistor 2b2 included in the noise detecting part 2g is electrically connected with the corresponding control line 2c1. The drain electrode 2b2b of the thin film transistor 2b2 is electrically connected with the corresponding data line 2c2. The source electrode 2b2c of the thin film transistor 2b2 is electrically connected to the corresponding capacitance part 2g1 and storage capacitor 2b3.

Details related to the noise detecting part 2g are described below.

The signal processing circuit 3 is located at the side of the array substrate 2 opposite to the scintillator 5 side.

As shown in FIG. 2, the signal processing circuit 3 includes, for example, the control circuit 31 and the signal detection circuit 32.

The control circuit 31 inputs a control signal Sa to the thin film transistors 2b2 located respectively in the multiple photoelectric conversion parts 2b and the thin film transistor 2b2 located respectively in the multiple noise detecting parts 2g. The control circuit 31 switches between the on-state and the off-state of the thin film transistor 2b2.

The control circuit 31 includes, for example, multiple gate drivers 31a and a row selection circuit 31b.

The control signal Sa is input from the image configuration circuit 4 or the like to the row selection circuit 31b. The row selection circuit 31b inputs the control signal Sa to the corresponding gate driver 31a according to the scanning direction of the X-ray image.

The gate driver 31a inputs the control signal Sa to the corresponding control line 2c1.

For example, the control circuit 31 sequentially inputs the control signal Sa via the flexible printed circuit board 2e1 to each control line 2c1.

The thin film transistor 2b2 that is located in the photoelectric conversion part 2b is switched to the on-state by the control signal Sa input to the control line 2c1; and the signal charge (an image data signal Sb) from the storage capacitor 2b3 can be received.

The signal detection circuit 32 reads the image data signals Sb from the multiple photoelectric conversion parts 2b and reads noise signals N from the multiple noise detecting parts 2g. For example, when the thin film transistor 2b2 is in the on-state, the signal detection circuit 32 reads the image data signal Sb from the storage capacitor 2b3 via the data line 2c2 and the flexible printed circuit board 2e2 according to the sampling signal from the image configuration circuit 4.

For example, the image data signal Sb can be read as follows.

First, the thin film transistors 2b2 are sequentially set to the on-state by the control circuit 31. By setting the thin film transistor 2b2 to the on-state, a certain charge is stored in the storage capacitor 2b3 via the bias line 2c3. Then, the thin film transistors 2b2 are set to the off-state. When X-rays are irradiated, the X-rays are converted into fluorescence by the scintillator 5. When the fluorescence is incident on the photoelectric conversion element 2b1, a charge (electrons and holes) is generated by the photoelectric effect; the generated charge and the charge (the heterogeneous charge) stored in the storage capacitor 2b3 combine; and the stored charge is reduced. Then, the control circuit 31 sequentially sets the thin film transistors 2b2 to the on-state. The signal detection circuit 32 reads the reduced charge (the image data signal Sb) stored in each storage capacitor 2b3 via the data line 2c2 according to the sampling signal.

Also, when the thin film transistors 2b2 are in the off-state, the signal detection circuit 32 reads the noise current (the noise signal N) from the noise detecting part 2g via the data line 2c2 and the flexible printed circuit board 2e2.

The image configuration circuit 4 is electrically connected with the signal detection circuit 32 via a wiring part 4a. The image configuration circuit 4 may be formed to have a continuous body with the signal processing circuit 3 or may perform wireless data communication with the signal detection circuit 32.

The image configuration circuit 4 configures an X-ray image based on the read image data signal Sb and the read noise signal N. The data of the configured X-ray image is output toward an external device from the image configuration circuit 4.

The scintillator 5 is located on the region in which the multiple photoelectric conversion parts 2b are located and converts the incident X-rays into fluorescence. The scintillator 5 is provided to cover the effective pixel region 201 on the substrate 2a. The scintillator 5 also can be provided to cover the region in which the multiple photoelectric conversion parts 2b and the multiple noise detecting parts 2g are located.

For example, the scintillator 5 can be formed using cesium iodide (CsI):thallium (Tl), sodium iodide (NaI):thallium (Tl), etc. In such a case, the scintillator 5 that is made of an aggregate of multiple columnar crystals is formed by forming the scintillator 5 by using vacuum vapor deposition, etc.

Also, for example, the scintillator 5 can be formed using gadolinium oxysulfide (Gd₂O₂S), etc. In such a case, a quadrilateral prism-shaped scintillator 5 can be provided for each photoelectric conversion part 2b.

Furthermore, a not-illustrated reflective layer can be provided to cover the front side of the scintillator 5 (the X-ray incident surface side) to increase the utilization efficiency of the fluorescence and improve the sensitivity characteristics.

Also, a not-illustrated moisture-resistant body that covers the scintillator 5 and the not-illustrated reflective layer can be provided to suppress the degradation of the characteristics of the scintillator 5 and the characteristics of the not-illustrated reflective layer due to water vapor included in the air.

The noise detecting part 2g will now be described further.

The noise that appears in the X-ray image can be broadly divided into random noise and lateral noise. Random noise occurs in a uniform distribution over the entire X-ray image, and therefore has no specific pattern or contour. In contrast, lateral noise appears as a striation in the lateral direction or longitudinal direction of the X-ray image. In such a case, because a human views the X-ray image, lateral noise that has patterns and/or contours affects the quality of the X-ray image much more than random noise without patterns or contours. It is therefore desirable to reduce the lateral noise of the X-ray detector.

The source of the lateral noise is considered to be mainly the control circuit 31. For example, there are cases where noise generated in the control circuit 31 and/or noise of the power supply line for driving the control circuit 31 enters the control line 2c1. The thin film transistor 2b2 is electrically connected between the control line 2c1 and the data line 2c2. It is therefore considered that noise does not enter the data line 2c2 from the control line 2c1 if the thin film transistor 2b2 is in the off-state. However, the photoelectric conversion element 2b1 is located at the vicinity of the thin film transistor 2b2. Therefore, line-to-line capacitance (stray capacitance) may occur between the thin film transistor 2b2 and the electrode 2blb of the photoelectric conversion element 2b1; and noise may enter the data line 2c2 from the control line 2c1 due to electrostatic coupling. Lateral noise is generated when noise enters the data line 2c2 from the control line 2c1.

In such a case, the lateral noise can be reduced by reducing the noise generated in the control circuit 31 and the power supply line. However, such noise countermeasures may make the structure of the X-ray detector 1 complex and more expensive.

Therefore, generally, multiple noise detecting parts that detect the lateral noise are provided, and offset processing is performed by subtracting a value corresponding to the detected lateral noise from the value of the image data signal Sb output from each photoelectric conversion part 2b.

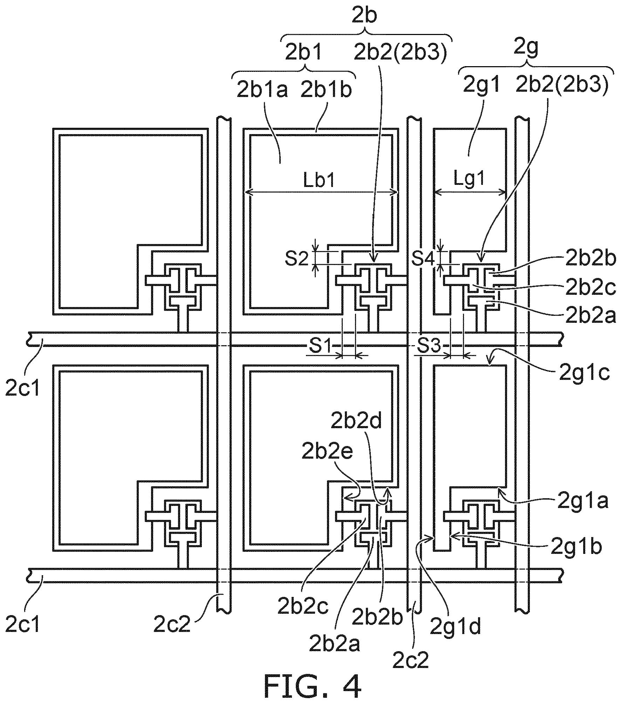

FIGS. 4 and 5 are schematic plan views illustrating the noise detecting part 2g.

The bias lines 2c3 are not illustrated in FIGS. 4 and 5.

As shown in FIGS. 4 and 5, the photoelectric conversion element 2b1 that is included in the photoelectric conversion part 2b includes a semiconductor layer 2bla having a p-n junction or a p-i-n structure, and the electrode 2blb located at the substrate 2a side of the semiconductor layer 2bla. The electrode 2blb is electrically connected with the source electrode 2b2c of the thin film transistor 2b2.

The semiconductor layer 2bla is not included in the noise detecting part 2g. For example, the noise detecting part 2g includes the capacitance part 2g1, the thin film transistor 2b2, and the storage capacitor 2b3. Because the noise detecting part 2g does not include the semiconductor layer 2bla, the output from the noise detecting part 2g includes a value corresponding to the noise without including a value corresponding to the dose of the X-rays.

Therefore, an X-ray image in which the lateral noise is suppressed can be obtained by subtracting the value of the noise signal N output from the noise detecting part 2g from the value of the image data signal Sb output from each photoelectric conversion part 2b. For example, the value that is used in the offset processing can be the average value of the values of the noise signals N output from the multiple noise detecting parts 2g.

As described above, when line-to-line capacitance occurs between the thin film transistor 2b2 and the electrode 2blb of the photoelectric conversion element 2b1, noise enters the data line 2c2 from the control line 2c1 due to electrostatic coupling.

Therefore, the detection accuracy of the lateral noise can be increased if the line-to-line capacitance between the capacitance part 2g1 and the thin film transistor 2b2 is about equal to the line-to-line capacitance between the electrode 2blb and the thin film transistor 2b2.

To generate about the same line-to-line capacitance, it is sufficient to set dimensions S3 and S4 between the capacitance part 2g1 and the thin film transistor 2b2 to be respectively about equal to dimensions S1 and S2 between the electrode 2blb and the thin film transistor 2b2.

In other words, it is sufficient for the gap dimension between the capacitance part 2g1 and the thin film transistor 2b2 included in the noise detecting part 2g to be substantially equal to the gap dimension between the electrode 2blb and the thin film transistor 2b2 included in the photoelectric conversion part 2b. In the specification, substantially the same or equal means that differences of about the manufacturing error are acceptable.

In such a case, it is favorable for the material of the capacitance part 2g1 to be the same as the material of the electrode 2blb.

It is favorable for the thickness of the capacitance part 2g1 to be about equal to the thickness of the electrode 2blb.

Also, it is favorable for the lengths of sides 2gla and 2g1b of the capacitance part 2g1 at the sides facing the thin film transistor 2b2 to be about equal to the lengths of sides 2b2d and 2b2e of the electrode 2blb at the sides facing the thin film transistor 2b2.

Here, in recent years, it is desirable to downsize the X-ray detector 1. In such a case, the effective pixel region 201 in which the multiple photoelectric conversion parts 2b are located is the region that images the X-ray image and therefore is difficult to make smaller.

On the other hand, a region 202 in which the multiple noise detecting parts 2g are located is not in the region that images the X-ray image and therefore can be made smaller as long as the lateral noise can be detected.

Also, the position of a side 2g1c of the capacitance part 2g1 that faces the side 2g1a and the position of a side 2g1d of the capacitance part 2g1 that faces the side 2g1b have little effect on the line-to-line capacitance.

Therefore, when the multiple noise detecting parts 2g are arranged along the data line 2c2 as shown in FIG. 4, a length Lg1 of the capacitance part 2g1 in a direction orthogonal to the direction in which the data line 2c2 extends can be less than a length Lb1 of the electrode 2blb in the direction orthogonal to the direction in which the data line 2c2 extends.

Also, when the multiple noise detecting parts 2g are arranged along the control line 2c1 as shown in FIG. 5, a length Lg2 of the capacitance part 2g1 in a direction orthogonal to the direction in which the control line 2c1 extends can be less than a length Lb2 of the electrode 2blb in the direction orthogonal to the direction in which the control line 2c1 extends.

Although a case where the length Lg1 or the length Lg2 is reduced is illustrated above, it is also possible to reduce the length Lg1 and the length Lg2.

In other words, the length of the capacitance part 2g1 is less than the length of the electrode 2blb in at least one of the direction in which the control line 2c1 extends or the direction in which the data line 2c2 extends.

The capacitance part 2g1 may be the electrode 2blb with a portion removed. Thus, the multiple capacitance parts 2g1 and the multiple electrodes 2blb can be formed in the same process; therefore, the productivity can be increased, and the manufacturing cost can be reduced.

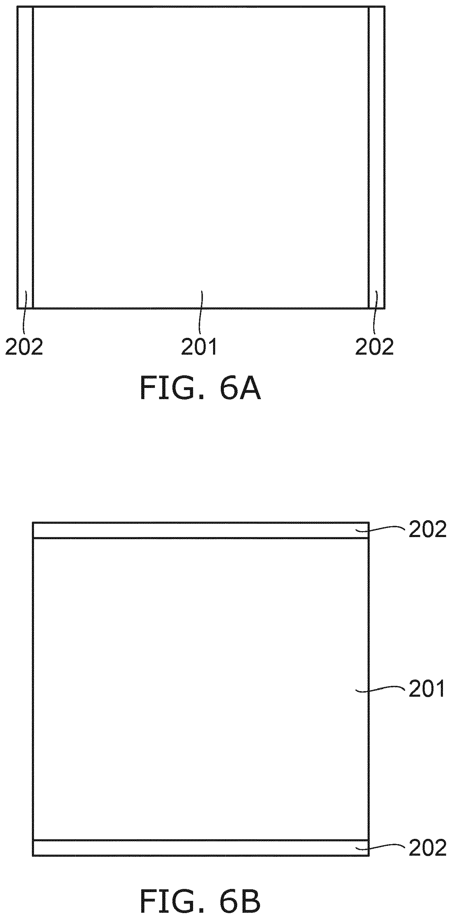

FIGS. 6A and 6B are schematic plan views illustrating the location of the region 202 in which the multiple noise detecting parts 2g are located.

As shown in FIGS. 6A and 6B, the region 202 in which the multiple noise detecting parts 2g are located can be located outside the effective pixel region 201.

For example, FIG. 6A is the case illustrated in FIG. 4, that is, the case where the multiple noise detecting parts 2g are arranged along the data line 2c2. In such a case, for example, as shown in FIG. 6A, one region 202 in which the multiple noise detecting parts 2g are located can be located at each of the two sides of the effective pixel region 201 in the direction in which the multiple data lines 2c2 are arranged.

For example, FIG. 6B is the case illustrated in FIG. 5, that is, the case where the multiple noise detecting parts 2g are arranged along the control line 2c1. In such a case, for example, as shown in FIG. 6B, one region 202 in which the multiple noise detecting parts 2g are located can be located at each of the two sides of the effective pixel region 201 in the direction in which the multiple control lines 2c1 are arranged.

Thus, as shown in FIG. 6A, the X-ray detector 1 becomes larger by the size of the region 202 that is included. However, as shown in FIG. 4, the length Lg1 of the capacitance part 2g1 in the direction orthogonal to the direction in which the data line 2c2 extends is less than the length Lb1 of the electrode 2blb in the direction orthogonal to the direction in which the data line 2c2 extends. Therefore, an X-ray detector 1 size increase can be suppressed.

Also, as shown in FIG. 6B, the X-ray detector 1 becomes larger by the size of the region 202 included. However, as shown in FIG. 5, the length Lg2 of the capacitance part 2g1 in the direction orthogonal to the direction in which the control line 2c1 extends is less than the length Lb2 of the electrode 2blb in the direction orthogonal to the direction in which the control line 2c1 extends. Therefore, the X-ray detector 1 size increase can be suppressed.

Also, one region 202 can be located at one side of the effective pixel region 201 in the direction in which the multiple data lines 2c2 are arranged or the direction in which the multiple control lines 2c1 are arranged.

Thus, the noise can be detected, and the X-ray detector 1 size increase can be further suppressed.

Also, one region 202 can be located at each of the two sides of the effective pixel region 201 in the direction in which the multiple data lines 2c2 are arranged and the direction in which the multiple control lines 2c1 are arranged. In other words, the region 202 also can be provided to surround the effective pixel region 201. In such a case as well, the X-ray detector 1 size increase can be suppressed.

As described above, the region 202 can be located on at least one side outside the effective pixel region 201.

As described above, the value that is used in the offset processing can be the average value of the values of the noise signals N output from the multiple noise detecting parts 2g. Therefore, by increasing the number of the noise detecting parts 2g, the noise can be detected with high accuracy, which in turn can increase the accuracy of the lateral noise removal. In such a case, the number of the noise detecting parts 2g can be increased by increasing the number of the regions 202.

If, however, the number of the regions 202 is increased, the X-ray detector 1 will become larger commensurately. However, as described above, the size of the region 202 can be reduced. Therefore, even when the number of the regions 202 is increased, the X-ray detector 1 size increase can be suppressed. The number and arrangement of the regions 202 can be appropriately determined according to the specifications, applications, and the like of the X-ray detector 1.

According to the X-ray detector 1 according to the embodiment as described above, the lateral noise can be detected. Also, the region 202 in which the multiple noise detecting parts 2g are located can be reduced. Therefore, the noise can be detected, and the X-ray detector 1 size increase can be suppressed.

Here, as described above, by increasing the number of the noise detecting parts 2g, noise can be detected with high accuracy, which in turn can increase the accuracy of the lateral noise removal.

For example, multiple noise detecting parts 2g can be electrically connected to each of the multiple data lines 2c2. For example, multiple noise detecting parts 2g can be electrically connected to each of the multiple control lines 2c1. In other words, the multiple regions 202 can be arranged. Thus, because the number of the noise detecting parts 2g can be increased, the noise can be detected with high accuracy, which in turn can increase the accuracy of the lateral noise removal.

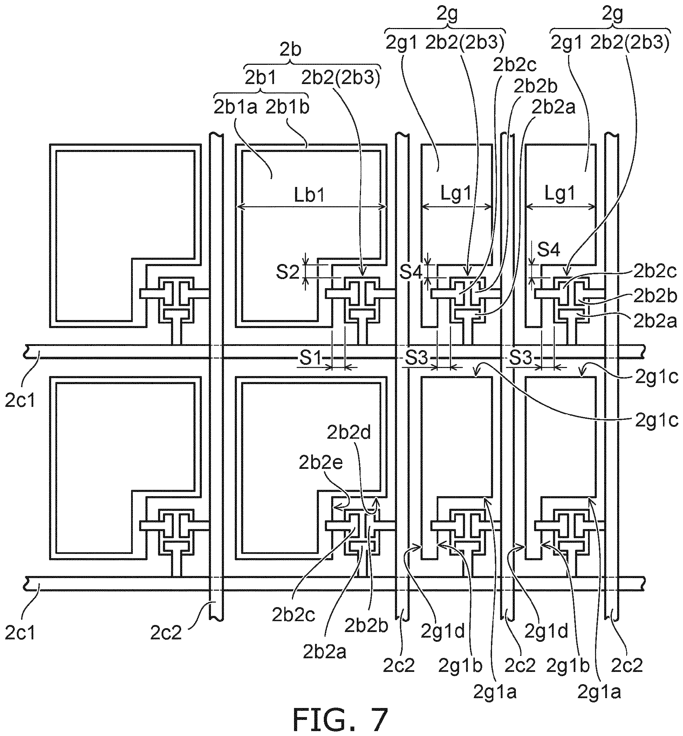

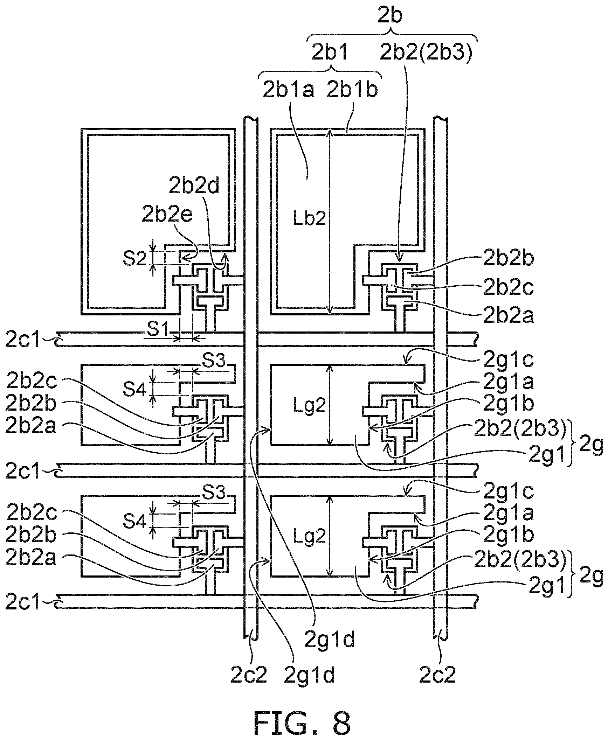

FIGS. 7 and 8 are schematic plan views illustrating arrangements of the noise detecting part 2g according to other embodiments.

The bias lines 2c3 are not illustrated in FIGS. 7 and 8.

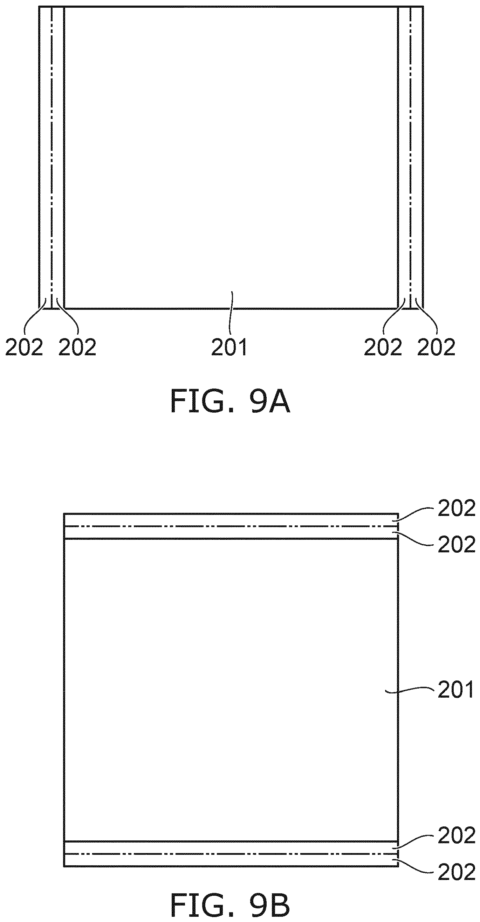

FIGS. 9A and 9B are schematic plan views illustrating locations of the region 202 in which the multiple noise detecting parts 2g are located.

As shown in FIG. 7, for example, multiple noise detecting parts 2g can be electrically connected to each of two adjacent data lines 2c2. In such a case, for example, as shown in FIG. 9A, two regions 202 can be located at each of the two sides of the effective pixel region 201 in the direction in which the multiple data lines 2c2 are arranged. Also, for example, two regions 202 can be located at one side of the effective pixel region 201 in the direction in which the multiple data lines 2c2 are arranged.

As shown in FIG. 8, for example, multiple noise detecting parts 2g can be electrically connected to each of two adjacent control lines 2c1. In such a case, for example, as shown in FIG. 9B, two regions 202 can be located at each of the two sides of the effective pixel region 201 in the direction in which the multiple control lines 2c1 are arranged. Also, for example, two regions 202 can be located at one side of the effective pixel region 201 in the direction in which the multiple control lines 2c1 are arranged.

Also, two regions 202 can be located at each of the two sides of the effective pixel region 201 in the direction in which the multiple data lines 2c2 are arranged and the direction in which the multiple control lines 2c1 are arranged. In other words, double regions 202 can be provided to surround the effective pixel region 201.

Although a case is illustrated where two regions 202 are located on at least one side outside the effective pixel region 201, the regions 202 can be located on three or more sides.

For example, multiple data lines 2c2 can be arranged in the direction in which the control line 2c1 extends outside the effective pixel region 201 in which the multiple photoelectric conversion parts 2b are located; and multiple noise detecting parts 2g can be electrically connected to each of the multiple data lines 2c2.

For example, multiple control lines 2c1 can be arranged in the direction in which the data line 2c2 extends outside the effective pixel region 201 in which the multiple photoelectric conversion parts 2b are located; and multiple noise detecting parts 2g can be electrically connected to each of the multiple control lines 2c1.

However, when the number of the regions 202 is increased, the X-ray detector 1 becomes larger commensurately. However, as described above, the size of the region 202 can be reduced. Therefore, even when the number of the regions 202 is increased, the X-ray detector 1 size increase can be suppressed. The number and arrangement of the regions 202 can be appropriately determined according to the specifications, application, and the like of the X-ray detector 1.

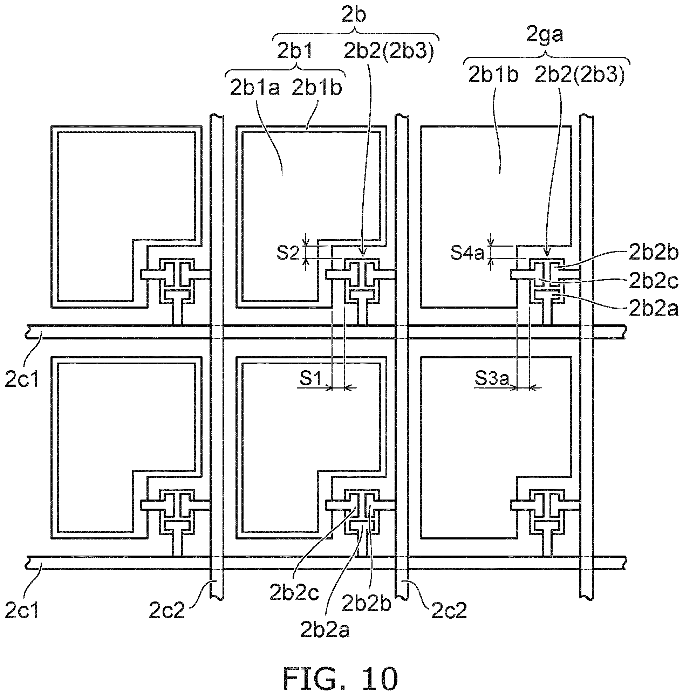

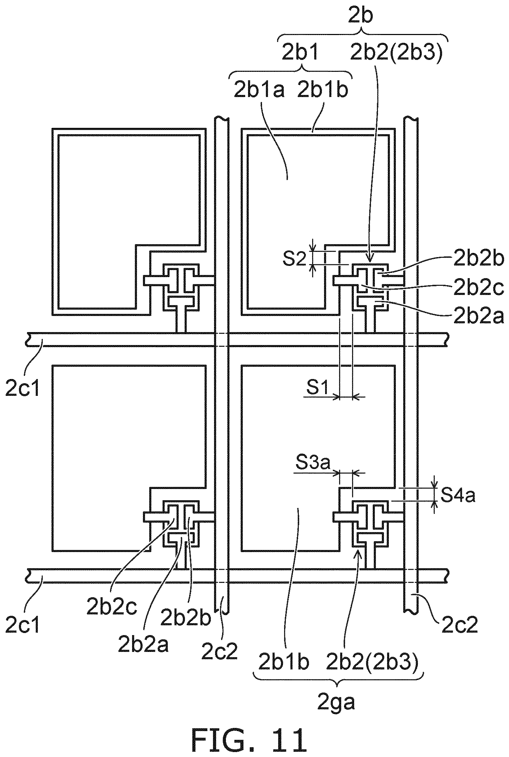

FIGS. 10 and 11 are schematic plan views illustrating a noise detecting part 2ga according to another embodiment.

The bias lines 2c3 are not illustrated in FIGS. 10 and 11.

As shown in FIGS. 10 and 11, the noise detecting part 2ga includes, for example, the electrode 2blb, the thin film transistor 2b2, and the storage capacitor 2b3. In other words, the noise detecting part 2ga can be the photoelectric conversion part 2b with the semiconductor layer 2bla removed. In such a case, the electrode 2blb that is located in the noise detecting part 2ga corresponds to the capacitance part 2g1 located in the noise detecting part 2g described above.

For example, the multiple noise detecting parts 2ga are arranged outside the effective pixel region 201. For example, as shown in FIG. 10, the multiple noise detecting parts 2ga can be arranged in the direction in which the data line 2c2 extends. As shown in FIG. 11, the multiple noise detecting parts 2ga also can be arranged in the direction in which the control line 2c1 extends. Also, the multiple noise detecting parts 2ga can be arranged in the direction in which the data line 2c2 extends and the direction in which the control line 2c1 extends.

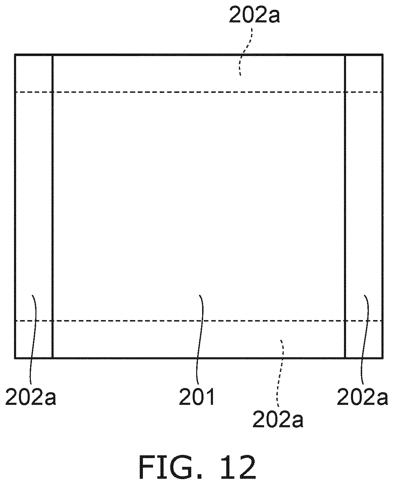

FIG. 12 is a schematic plan view illustrating the location of a region 202a in which the multiple noise detecting parts 2ga are located.

As shown in FIG. 12, the region 202a in which the multiple noise detecting parts 2ga are located is positioned outside the effective pixel region 201. In the case of the illustration of FIG. 12, one region 202a is located at each of the two sides of the effective pixel region 201. Similarly to the case of the region 202 described above, the region 202a can be located on at least one side outside the effective pixel region 201.

Similarly to the case of the noise detecting part 2g described above, the semiconductor layer 2bla is not included in the noise detecting part 2ga; therefore, the output from the noise detecting part 2ga includes values corresponding to noise but does not include values corresponding to the dose of the X-rays.

Therefore, an X-ray image in which the lateral noise is suppressed can be obtained by subtracting the value of the noise signal N output from the noise detecting part 2ga from the value of the image data signal Sb output from each photoelectric conversion part 2b. The value that is used in the offset processing can be the average value of the values of the noise signals N output from the multiple noise detecting parts 2ga.

In such a case, if the noise detecting part 2ga is the photoelectric conversion part 2b with the semiconductor layer 2bla removed, dimensions S3a and S4a between the electrode 2blb and the thin film transistor 2b2 of the noise detecting part 2ga are respectively substantially the same dimensions S1 and S2 between the electrode 2blb and the thin film transistor 2b2 of the photoelectric conversion part 2b. It is therefore easy to increase the detection accuracy of the lateral noise because the line-to-line capacitance of the noise detecting part 2ga is substantially equal to the line-to-line capacitance of the photoelectric conversion part 2b.

On the other hand, considering downsizing of the X-ray detector 1, the noise detecting part 2g described above is favorable. Therefore, the configuration of the noise detecting part can be selected as appropriate according to the specifications, applications, and the like of the X-ray detector 1.

Here, the multiple photoelectric conversion parts 2b, the multiple control lines 2c1, the multiple data lines 2c2, the multiple bias lines 2c3, and the multiple noise detecting parts 2g (2ga) are formed on the substrate 2a by using semiconductor manufacturing processes such as film formation methods such as sputtering or the like, photolithography, etching such as dry etching, wet etching, etc.

In such a case, the multiple noise detecting parts 2g (2ga) and the multiple photoelectric conversion parts 2b can be formed together because the configuration of the multiple noise detecting parts 2g (2ga) is similar to the configuration of the multiple photoelectric conversion parts 2b. However, the semiconductor layer 2bla is formed in the multiple photoelectric conversion parts 2b, but the semiconductor layer 2bla is not formed in the multiple noise detecting parts 2g (2ga). Therefore, the process conditions of dry etching, wet etching, etc., are different between the effective pixel region 201 in which the multiple photoelectric conversion parts 2b are located and the region 202 (202a) in which the multiple noise detecting parts 2g (2ga) are located.

The dimensions and the like fluctuate more easily for the components formed at the vicinity of the boundary between the effective pixel region 201 and the region 202 (202a) having different process conditions. In such a case, when fluctuation of the dimensions and the like of the photoelectric conversion part 2b occurs, image characteristic fluctuation or electrical disconnect may occur, and there is a risk that the quality of the X-ray image may degrade.

Therefore, the X-ray detector 1 according to the embodiment is configured so that at least one of the following (1) to (3) applies.
(1) The signal detection circuit 32 does not read the image data signals Sb from the photoelectric conversion parts 2b adjacent to the noise detecting parts 2g (2ga).
(2) The image configuration circuit 4 does not use the image data signals Sb read from the photoelectric conversion parts 2b adjacent to the noise detecting parts 2g (2ga) when configuring the X-ray image.
(3) The photoelectric conversion parts 2b adjacent to the noise detecting parts 2g (2ga) are not electrically connected with at least one of the control circuit 31 or the signal detection circuit 32.

In the case of (3), for example, the photoelectric conversion parts 2b adjacent to the noise detecting parts 2g (2ga) are not electrically connected with at least one of the corresponding control line 2c1 or the corresponding data line 2c2. For example, the electrodes or wiring parts of the thin film transistors 2b2 located in the photoelectric conversion parts 2b adjacent to the noise detecting parts 2g (2ga) are electrically disconnected. For example, the data lines 2c2 connected to the photoelectric conversion parts 2b adjacent to the noise detecting parts 2g (2ga) are electrically disconnected. For example, the data lines 2c2 connected to the photoelectric conversion parts 2b adjacent to the noise detecting parts 2g (2ga) and the wiring parts located in the flexible printed circuit board 2e2 are not connected.

By using at least one of (1) to (3), the quality of the X-ray image can be maintained even when fluctuation occurs in the dimensions and the like of the photoelectric conversion parts 2b formed in the vicinity of the boundary between the effective pixel region 201 and the region 202 (202a).

At least one of (1) to (3) also can be used for the first photoelectric conversion parts 2b adjacent to the noise detecting parts 2g (2ga) and the second photoelectric conversion parts 2b located at the side opposite to the noise detecting parts 2g (2ga) with the first photoelectric conversion parts 2b interposed.

While certain embodiments have been described, these embodiments have been presented by way of example only, and are not intended to limit the scope of the inventions. Indeed, the novel embodiments described herein may be embodied in a variety of other forms; furthermore, various omissions, substitutions, and changes in the form of the embodiments herein may be made without departing from the spirit of the inventions. The accompanying claims and their equivalents are intended to cover such forms or modifications as would fall within the scope and spirit of the inventions. Moreover, above-mentioned embodiments can be combined mutually and can be carried out.

## Claims

1. A radiation detector, comprising:
a plurality of control lines extending in a first direction;
a plurality of data lines extending in a second direction orthogonal to the first direction;
photoelectric conversion parts located respectively in a plurality of regions defined by the plurality of control lines and the plurality of data lines;
a plurality of noise detecting parts arranged outside a region in which a plurality of the photoelectric conversion parts is located;
a control circuit inputting control signals to first thin film transistors located respectively in the plurality of photoelectric conversion parts and to second thin film transistors located respectively in the plurality of noise detecting parts;
a signal detection circuit reading image data signals from the plurality of photoelectric conversion parts and reading noise signals from the plurality of noise detecting parts; and
an image configuration circuit configuring a radiation image based on the read image data signals and the read noise signals,
the radiation detector being configured so that
the signal detection circuit does not read the image data signals from the photoelectric conversion parts adjacent to the noise detecting parts,
the image configuration circuit does not use the image data signals read from the photoelectric conversion parts adjacent to the noise detecting parts when configuring the radiation image, and/or
the photoelectric conversion parts adjacent to the noise detecting parts are not electrically connected with at least one of the control circuit or the signal detection circuit.

2. The radiation detector according to claim 1, wherein
each of the plurality of photoelectric conversion parts includes a photoelectric conversion element,
the photoelectric conversion element includes an electrode electrically connected with the first thin film transistor,
each of the plurality of noise detecting parts includes a capacitance part electrically connected with the second thin film transistor, and
a length of the capacitance part is less than a length of the electrode in at least one of the first direction or the second direction.

3. The radiation detector according to claim 1 or 2, wherein
a gap dimension between the second thin film transistor and the capacitance part is substantially equal to a gap dimension between the first thin film transistor and the electrode.

4. The radiation detector according to any one of claims 1 to 3, wherein
the capacitance part includes a same material as the electrode.

5. The radiation detector according to any one of claims 1 to 4, wherein
the plurality of noise detecting parts is arranged along the data line, and
the length in the first direction of the capacitance part is less than the length in the first direction of the electrode.

6. The radiation detector according to any one of claims 1 to 5, wherein
the plurality of noise detecting parts is arranged along the control line, and
the length in the second direction of the capacitance part is less than the length in the second direction of the electrode.
